# EUROPEAN PATENT SPECIFICATION

(11) **EP 3 521 640 B1**
(45) Date of publication and mention of the grant of the patent: **03.03.2021**
(21) Application number: 19153996.4
(22) Date of filing: 28.01.2019
(51) Int. Cl.: F16B 2/20, F16M 11/14, F16C 11/06, B29C 45/00, F16L 3/22

(54) **BALL AND SOCKET FASTENER FOR ATTACHING COMPONENTS**
KUGELGELENKBEFESTIGUNGSELEMENT ZUR BEFESTIGUNG VON BAUTEILEN
DISPOSITIF DE FIXATION À ROTULE PERMETTANT DE FIXER DES COMPOSANTS

(30) Priority: 31.01.2018 US 201815884991
(43) Date of publication of application: 07.08.2019
(73) Proprietor: A. Raymond et Cie, 38000 Grenoble (FR)
(72) Inventor: Reznar, Jason F., Birmingham, MI 48009 (US); Teller, William, Lake Orion, MI 48360 (US)
(74) Representative: Tilmann, Max Wilhelm

(56) References cited:
- CN-U- 202 327 384
- US-A1- 2005 067 544

## Description

### TECHNICAL FIELD

The disclosed inventive concept relates generally to clip fasteners for attaching two or more articles together. More particularly, the disclosed inventive concept relates to a swivelable and pivotable clip fastener comprising a ball and socket construction for attaching a first article to a second article. The swivelable and pivotable clip fastener is relatively easy to use. The articles may be electrical or fluid conduits or may include a substrate. The clip fastener is preferably produced in a one-shot injection molding process. The ball and socket arrangement allows 360 degrees of rotation and pivoting of one article relative to the other. One or more slots are formed in the ball. The socket includes anti-release arms. Optionally, the ball may be formed from a first material and the socket may be formed from a second material.

### BACKGROUND OF THE INVENTION

In many industries it is necessary to assemble two components together in an easy and efficient manner. Examples of such requirements are the need to attach one conduit, such as an electrical or fluid conduit, to either another conduit or to a substrate, such as the inner fender liner of a vehicle.

Conventional clip fasteners typically include a first part for attaching a first conduit and a second part for attaching a second conduit or a substrate such as the fender liner. These fasteners are formed from a polymerized material, typically by molding.

In the case of a clip fastener used to attach a first conduit to a second conduit, the clip fastener includes a first clip end, a second clip end, and an elongated arm formed between the clip ends. Because the clip fastener is an integrally molded piece, the first and second clip ends are fixed relative to each other, thereby preventing any adjustability of first end relative to the second clip end.

The lack of fastener clip adjustability challenges installers during assembly of, for example, a vehicle. The fastener clips are specifically used to hold one conduit relative to another conduit to thereby limit relative movement. The fastener clips are typically attached to the conduits after the conduits are fitted to the vehicle. While mass production has gone a significant way toward standardizing parts placement during assembly, not every feature is consistent, particularly in the case of electrical conduits which have a certain inherent degree of flexibility. Often the conduits to be attached are not in alignment with one another, making it difficult for the installer to readily attach the two conduits to one another using conventional fastener clips having fixed and unmovable clip ends.

In the instance where the fastener clip includes an anchor end and a clip end, the installer is faced with many of the same challenges encountered when the fastener clip includes two clip ends. Particularly, the fastener clip, once anchored to the substrate, would have a fixed position relative to the conduit to which it is being attached.

In a known improvement to existing fastener clips, a two-piece clip having rotatably attached clip ends is available. In this fastener clip, a first clip having a stem extending therefrom and a second clip having a stem extending therefrom are joined at their stems. The first clip is rotatable at the stem joint with respect to the second clip. While providing a partial solution to the challenges faced by installers, this two-ended clip is limited in use because the rotation is only along the long axis formed by the two joined stem joints. In addition, being of a two-piece construction, the two-piece clip is the product of two joined pieces with each piece being separately formed, thereby adding additional expense to production. Furthermore, the Chinese document CN 202 327 384 U discloses a direction- adjustable dual-pipe clamp and US 2005/0067544 A1 discloses a support assembly.

Thus an alternative to the known fastener clip construction that provides effective attachment while providing flexibility between the two ends, whether both ends are conduit clip ends or only one end is a conduit clip end and the other end is a substrate anchor, remains wanting. For example, it is desirable to provide both a swivel arrangement and a pivoting arrangement in the same fastener arrangement. It is also desirable to provide such a fastener arrangement that is integrally molded thereby minimizing expenses related to assembly during manufacturing.

Accordingly, and as is the case in many industries, known approaches to fastening two or more components together using known fasteners are often undesirable and impractical. An improved fastener arrangement for attaching two components together is desirable in the industry.

### SUMMARY OF THE INVENTION

The disclosed inventive concept overcomes the problems associated with known fastener clips. The disclosed inventive concept provides a fastener clip for attaching two or more articles together such as electrical or fluid conduits or connecting an article such as an electrical or fluid conduit to a substrate such as one might find on a vehicle. In general, the disclosed inventive concept provides a ball and socket fastener formed as a single injection-molded article by way of a one-shot injection molding process. The ball and socket arrangement allows 360 degrees of rotation and pivoting of one article relative to the other. The ball is both swivelable and pivotable with respect to the socket.

The ball of the ball and socket fastener includes opposed slots molded or etched therein. The socket of the ball and socket fastener includes a ball-receiving cavity defined by a cavity wall. The socket further includes anti-release arms extending from the cavity wall. The anti-release arms work in conjunction with the opposed slots formed on the ball to prevent misalignment of the ball relative to the socket and also to prevent unintended removal of the ball from the socket. The opposed slots match the anti-release arms whereby the slots and the anti-release arms engage each other to allow the ball and socket to both rotate and pivot.

The ball and socket fastener may be formed as a single, integral item or may be formed as two separately injected parts. If formed as a single, integral item, a single gate may be used through which the plastic material is injected. A flash gate is formed between the ball and the socket which is broken after molding to release two separate components.

Alternatively, if formed as two separate components, a first gate is used through which the plastic material is injected to form one or the other of the ball or the socket and a second gate is used through which the plastic material is injected to form the other of the ball or the socket. The plastic material flowing through the first gate may be the same as or may be different from the plastic material flowing through the second gate.

The above advantages and other advantages and features will be readily apparent from the following detailed description of the preferred embodiments when taken in connection with the accompanying drawings.

### BRIEF DESCRIPTION OF THE DRAWINGS

For a more complete understanding of this invention, reference should now be made to the embodiments illustrated in greater detail in the accompanying drawings and described below by way of examples of the invention wherein:
FIG. 1 is a perspective view of an embodiment of the ball and socket fastener of the disclosed inventive concept;
FIG. 2 is a side view of the ball and socket fastener of FIG. 1;
FIG. 3 is a first side view of the ball of the ball and socket fastener of FIG. 1;
FIG. 4 is a second side view of the ball of the ball and socket fastener of FIG. 1;
FIG. 5 is a perspective view of the socket of the ball and socket fastener of FIG. 1;
FIG. 6 is a side view of the socket of the ball and socket fastener of FIG. 1;
FIG. 7 is a top view of the socket of the ball and socket fastener of FIG. 1;
FIG. 8 is a view of a portion of the ball and socket fastener of FIG. 1 particularly illustrating the ribs formed on one of the semi-hemispheric slots formed on the ball;
FIG. 9 is a view of a portion of the ball and socket fastener of FIG. 1 illustrating the arms in conjunction with the semi-hemispheric slots;
FIG. 10 is a perspective view of another embodiment of the ball and socket fastener of the disclosed inventive concept;
FIG. 11 is a side view of the ball and socket fastener of FIG. 10;
FIG. 12 is a first side view of the ball of the ball and socket fastener of FIG. 10;
FIG. 13 is a second side view of the ball of the ball and socket fastener of FIG. 10;
FIG. 14 is a top view of the ball of the ball and socket fastener of FIG. 10;
FIG. 15 is a perspective view of the socket of the ball and socket fastener of FIG. 10;
FIG. 16 is a first side view of the socket of the ball and socket fastener of FIG. 10;
FIG. 17 is a second side view of the socket of the ball and socket fastener of FIG. 10;
FIG. 18 is a top side view of the socket of the ball and socket fastener of FIG. 10;
FIG. 19 is a diagrammatic sectional view of the ball within the socket highlighting the negative draft potential as one characteristic of the fastener clip of the disclosed inventive concept that prevents misalignment or removal of the ball from the socket;
FIG. 20 is a diagrammatic sectional view of the ball within the socket highlighting the opposite angular tool steels as another characteristic of the fastener clip of the disclosed inventive concept that prevents misalignment or removal of the ball from the socket;
FIG. 21 is a side view of an alternative embodiment of the disclosed inventive concept in which optional clip ends are illustrated and in which a flat surface is formed on the top of the ball and a flat area is formed on the cavity of the socket to thereby allow 360 degrees of rotation but to restrict the ball and socket from pivoting;
FIG. 22 is a side view of a further alternative embodiment of the disclosed inventive concept in which optional clip ends are illustrated and in which flat surfaces are formed on opposite sides of the ball and opposing flat areas are formed on the cavity of the socket to thereby the ball to pivot relative to the socket but to restrict 360 degrees of rotation;
FIG. 23 is a side view of the ball and socket fastener of the disclosed inventive concept illustrating a single injection gate arrangement with a flash gate formed between the ball and the socket;
FIG. 24 is a sectional diagrammatic view of a mold having therein an integrally molded ball and socket fastener according to the disclosed inventive concept viewed from a first angle;
FIG. 25 is a sectional diagrammatic view of a mold having therein an integrally molded ball and socket fastener according to the disclosed inventive concept viewed along line 25-25 of FIG. 24;
FIG. 26 is a side view of the ball and socket fastener of the disclosed inventive concept illustrating a dual injection gate arrangement in which the ball and the socket are separately formed;
FIG. 27 is a side view illustrating a socket of a ball and socket according to a variation of the disclosed inventive concept having an integral fastener clip;
FIG. 28 is a side view illustrating a ball of a ball and socket according to a variation of the disclosed inventive concept having an integral fastener clip;
FIG. 29 is a side view illustrating a socket of a ball and socket according to a variation of the disclosed inventive concept having an integral hole mount;
FIG. 30 is a side view illustrating a socket of a ball and socket according to a variation of the disclosed inventive concept having an integral edge mount;
FIG. 31 is a side view illustrating a socket of a ball and socket according to a variation of the disclosed inventive concept having an integral stud mount;
FIG. 32 is a side view illustrating a ball and socket assembly according to the disclosed inventive concept having an integral height adjuster;
FIG. 33 is a first perspective view illustrating the ball and socket assembly having an integral height adjuster shown in FIG. 32; and
FIG. 34 is a second perspective view illustrating the ball and socket assembly having an integral height adjuster shown in FIG. 32.

### DETAILED DESCRIPTION OF THE PREFERRED EMBODIMENT

As those of ordinary skill in the art will understand, various features of the embodiments illustrated and described with reference to any one of the figures may be combined with features illustrated in one or more other figures to produce alternative embodiments that are not explicitly illustrated or described. The combinations of features illustrated provide representative embodiments for typical applications. However, various combinations and modifications of the features consistent with the teachings of the present disclosure may be desired for particular applications or implementations.

In general, the disclosed inventive concept provides a ball and socket fastener formed as a single injection-molded article by way of a one-shot injection molding process or as a dual injection-molded article. The ball and socket arrangement allows 360 degrees of rotation and pivoting of one article relative to the other. The figures illustrate the ball and socket fastener for fastening one article to another. In particular, the ball and socket fastener of the disclosed inventive concept attaches a first article such as an electrical conduit, a fluid conduit, or a substrate, to a second article such as another electrical conduit, another fluid conduit, or another substrate.

Idealized but non-limiting versions of the ball and socket fastener of the disclosed inventive concept are illustrated in the accompanying figures and are discussed in relation thereto. It is to be understood that the ball and socket fasteners as set forth in the various accompanying figures are for illustrative purposes and are not to be limited by the illustrated size or shape of the ball and socket assembly or of the individual ball and socket.

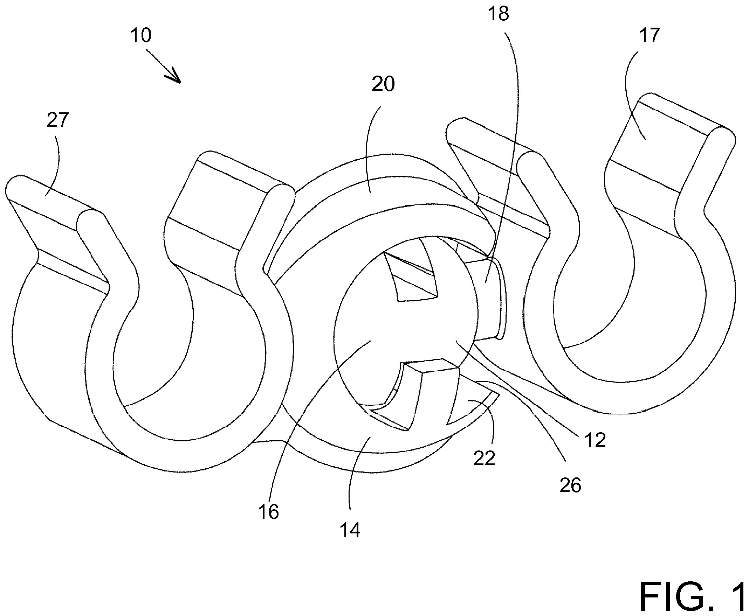

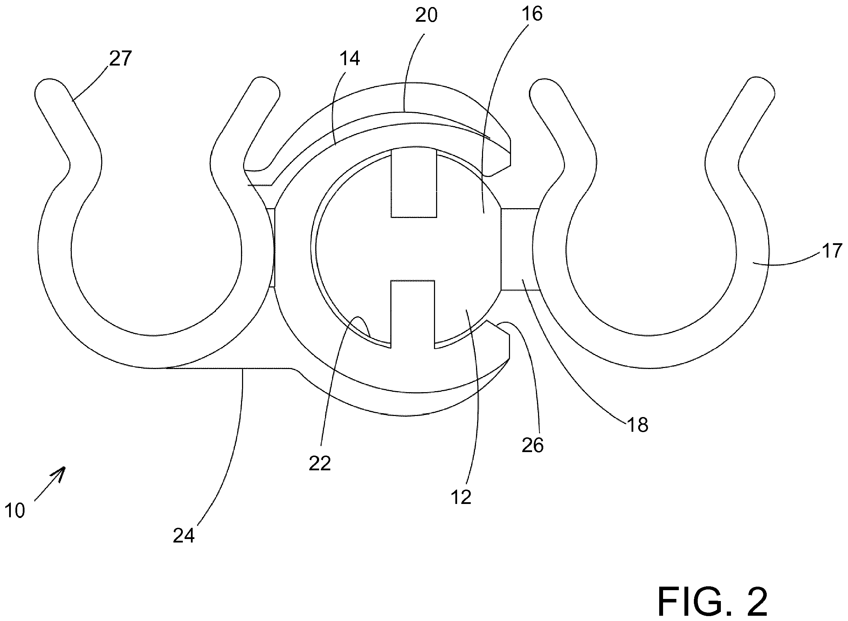

Referring to FIGS. 1 and 2, an embodiment of the ball and socket fastener of the disclosed inventive concept is illustrated in perspective and side views respectively. The ball and socket fastener, generally illustrated as 10, includes a ball 12 and a socket 14. The ball 12 includes a round body 16 and an attachment base 18 formed thereon. A number of attachment structures, such as a clip 17 (or a substrate anchor discussed below), may be fitted to the attachment base 18.

The socket 14 includes a body 20, a ball cavity 22, and an attachment base 24. The ball cavity 22 is generally round and includes an open end 26. A number of attachment structures, such as a clip 27 (or a substrate anchor discussed below), may be fitted to the attachment base 24.

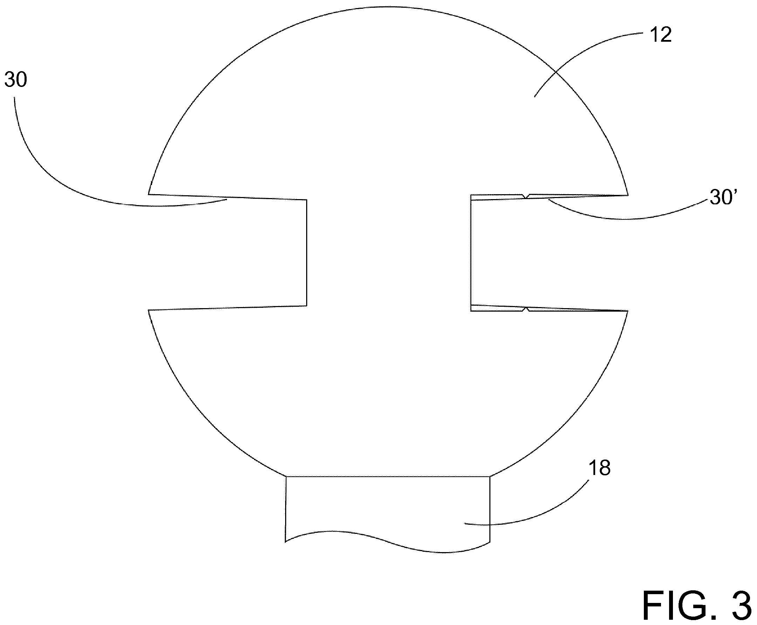

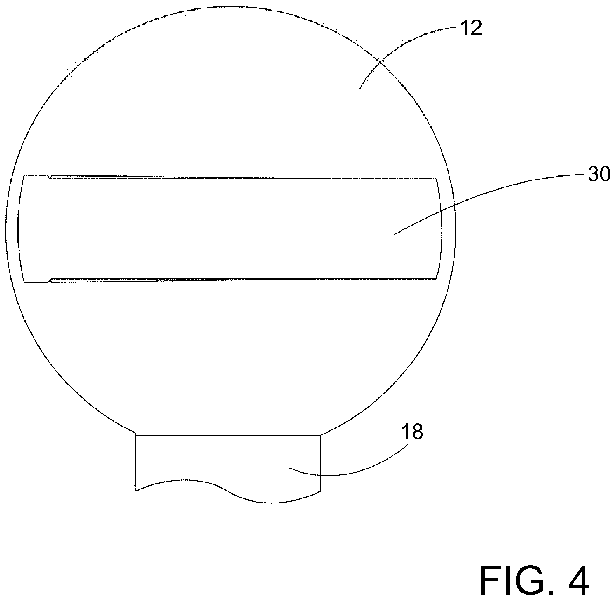

The ball 12 of the ball and socket fastener 10 is illustrated in isolation in FIGS. 3 and 4 in which a first side view and a second side view are respectively shown. The ball 12 includes opposed semi-hemispheric slots 30 and 30'. The semi-hemispheric slots 30 and 30' are formed in the ball 12 during production to minimize raw material requirements and to prevent an interior bubble being created within the ball 12 during the injection molding process if formed by an injection process. Alternatively, the semi-hemispheric slots 30 and 30' may be etched following production. The illustrated numbers, widths, lengths and depths of the semi-hemispheric slots 30 and 30' are suggestive only and may all be varied and tuned to fit a specific application.

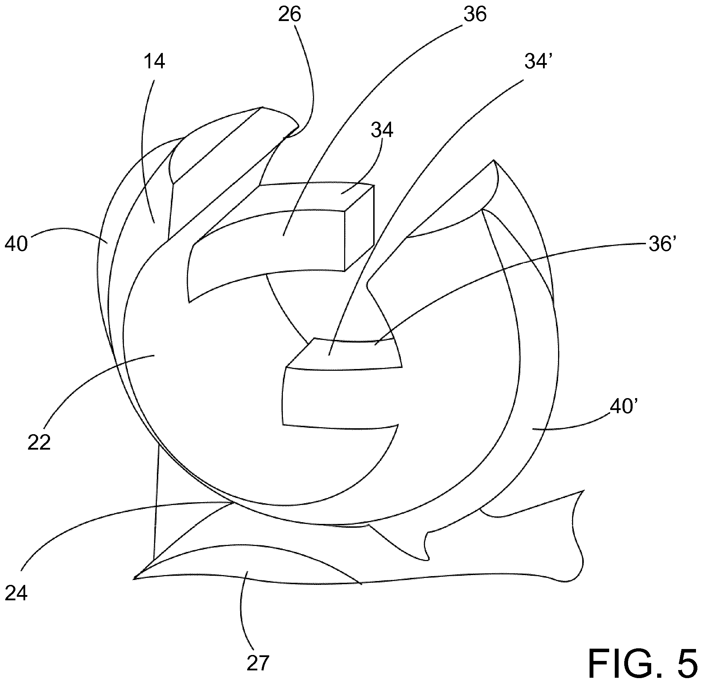

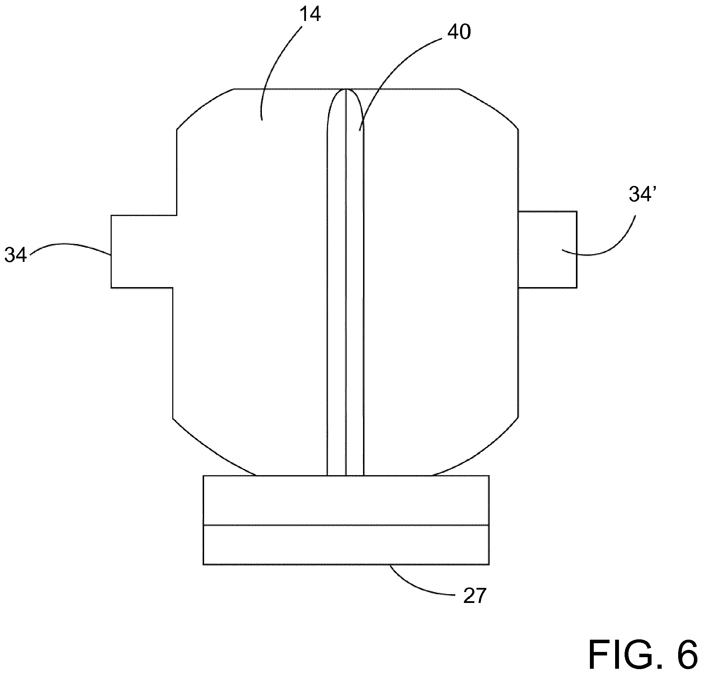

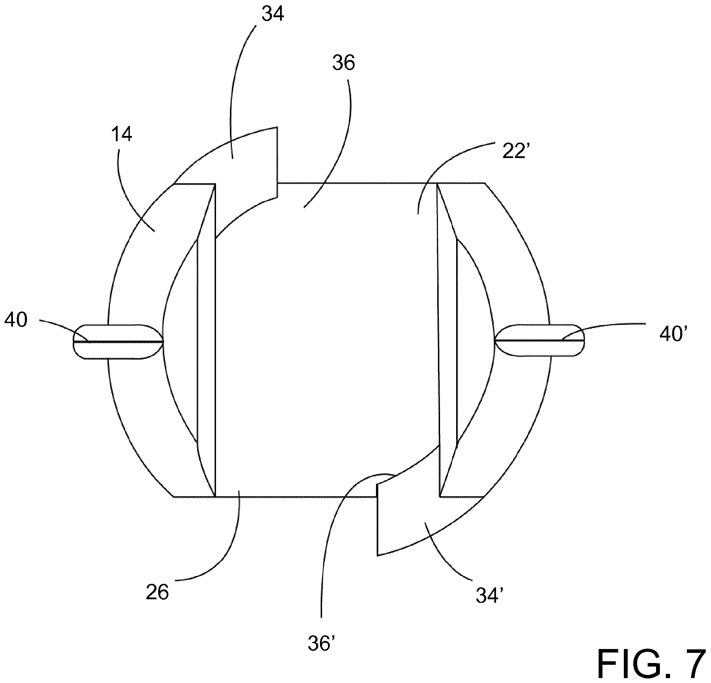

The socket 14 of the ball and socket fastener 10 is illustrated in isolation in FIGS. 5 through 7 in which a perspective view, a side view, and a top view are respectively shown. The socket 14 includes a pair of offset anti-release arms 34 and 34'. The anti-release arm 34 includes an arcuate, ball-contacting surface 36 and the anti-release arm 34' includes an arcuate, ball-contacting surface 36'. The arcuate surfaces 36 and 36' preferably but not absolutely contact the ball 12 to aid in securely retaining the ball 12 in the socket 14 and to prevent release of the ball 12 therefrom. A pair of optional arm-interfering reinforcing ribs 40 and 40' may be included around a portion of the periphery of the socket 14.

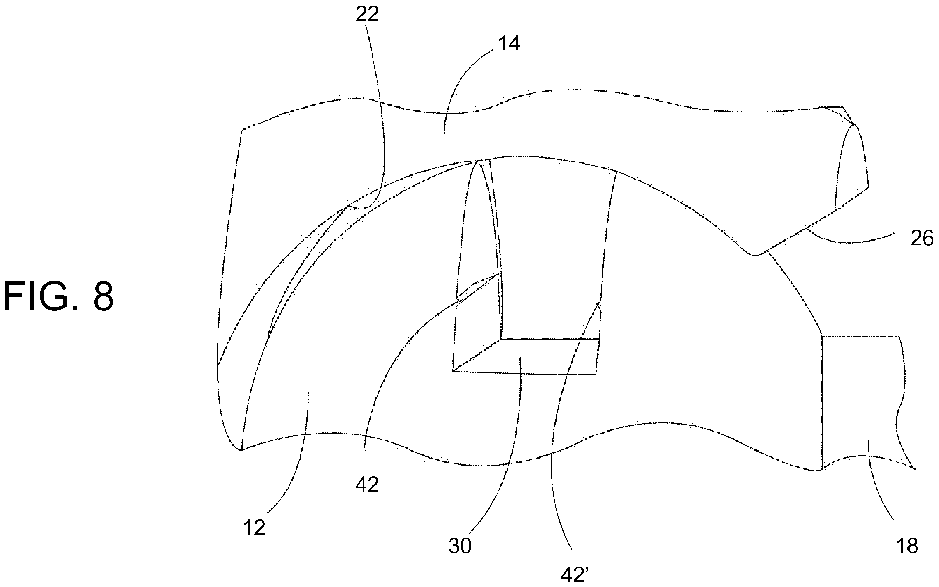

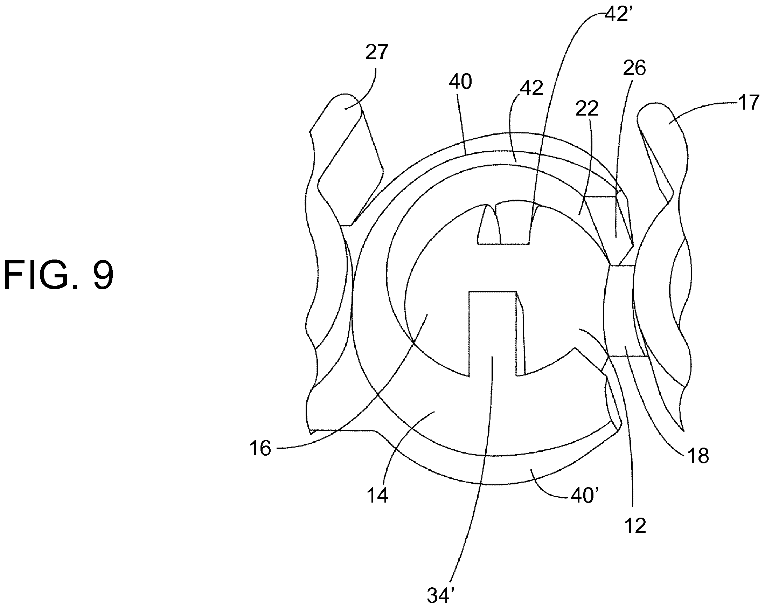

To prevent engagement of the anti-release arms 34 and 34' with the semi-hemispheric slots 30 and 30', engagement blocking ribs are optionally but preferably formed in the semi-hemispheric slots 30 and 30'. This arrangement is illustrated in FIGS. 8 and 9. As illustrated, a pair of opposed ribs 42 and 42' is formed in the semi-hemispheric slot 30. It is to be understood that a pair of opposed ribs are also formed in the semi-hemispheric slot 30'.

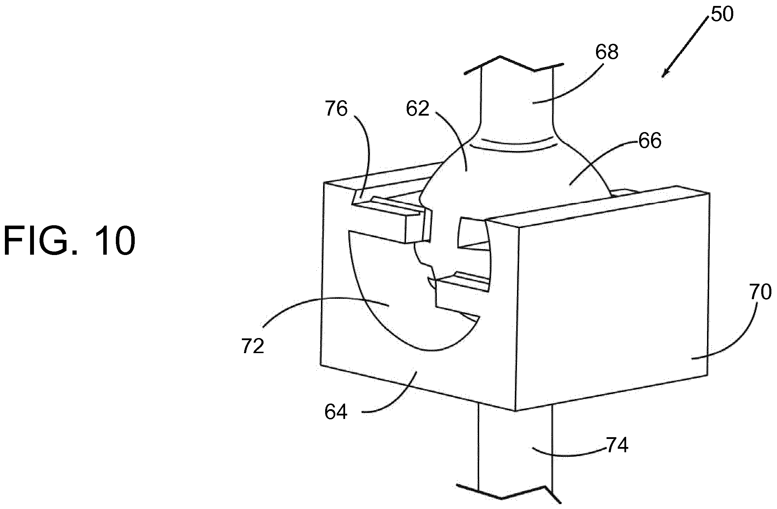

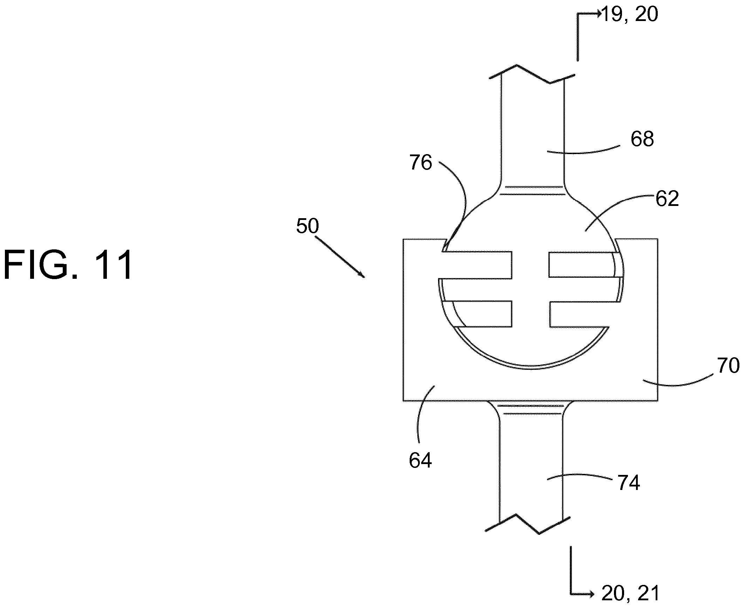

Referring to FIGS. 10 and 11, the ball and socket fastener of the disclosed inventive concept is illustrated in perspective and side views respectively. The ball and socket fastener, generally illustrated as 50, includes a ball 62 and a socket 64. The ball 62 includes a round body 66 and an attachment base 68 formed thereon. A number of attachment structures, such as a clip or a substrate anchor, may be fitted to the attachment base 68.

The socket 64 includes a body 70, a ball cavity 72, and an attachment base 74. The ball cavity 72 is generally round and includes an open end 76. A number of attachment structures, such as a clip or a substrate anchor, may be fitted to the attachment base 74.

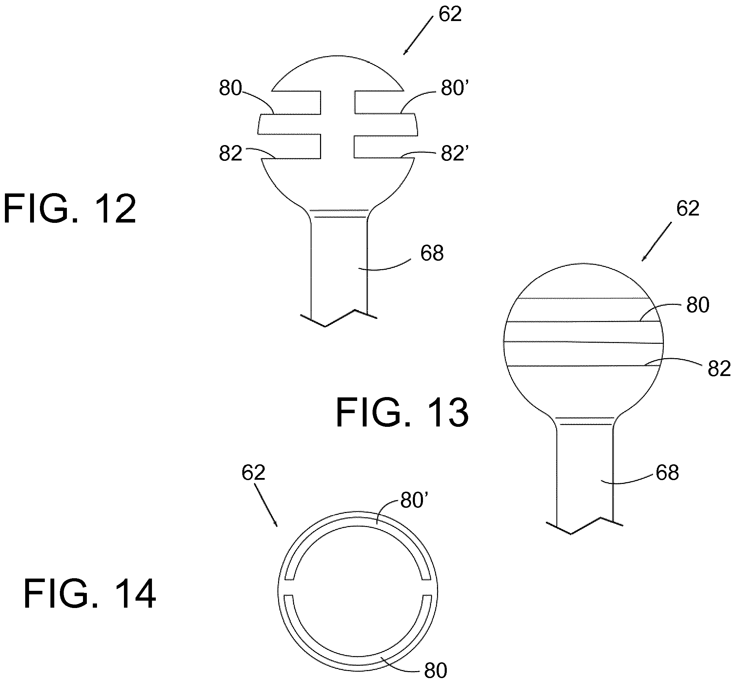

The ball 62 of the ball and socket fastener 50 is illustrated in isolation in FIGS. 12 through 14 in which a first side view, a second side view, and a top view are respectively shown. The ball 62 includes a pair of opposed semi-hemispheric slots 80 and 80' spaced apart from a pair of opposed semi-hemispheric slots 82 and 82'. The semi-hemispheric slots 80, 80', 82, and 82' may be molded into the ball 62 during production or may be etched following production. The illustrated numbers, widths, lengths and depths of the semi-hemispheric slots 80, 80', 82, and 82' are suggestive only and may all be varied and tuned to fit a specific application.

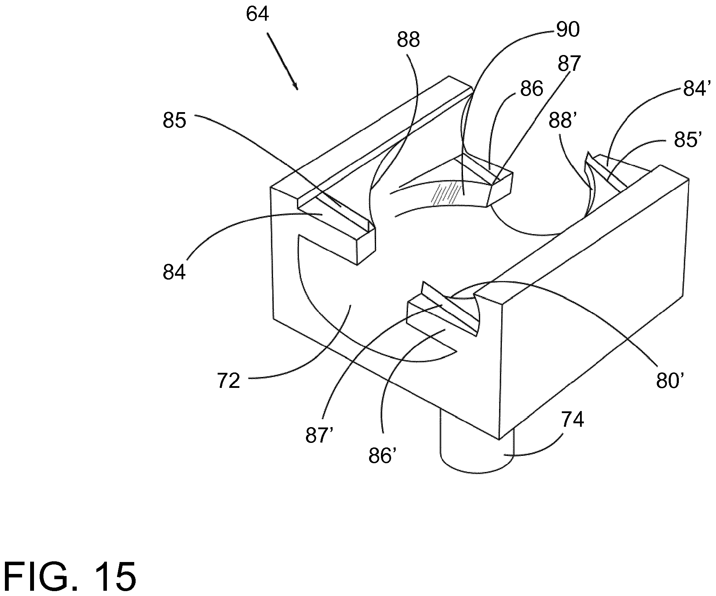

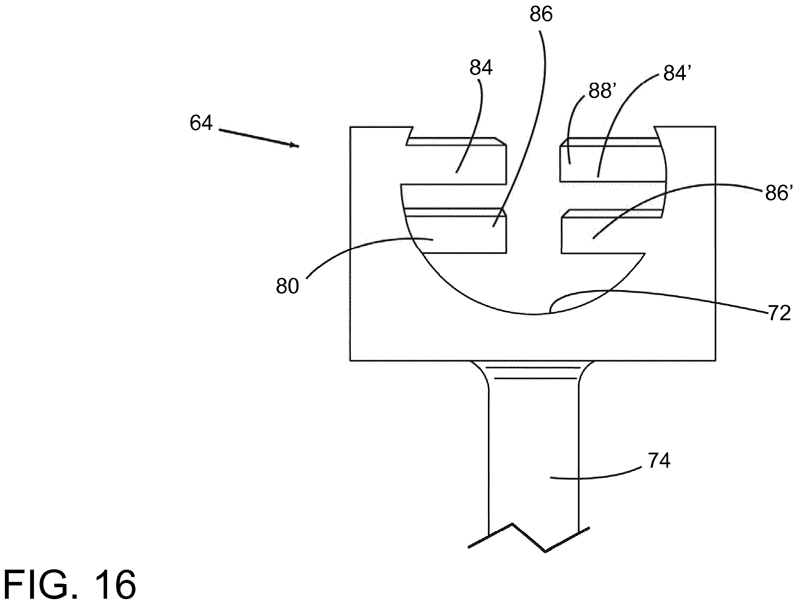

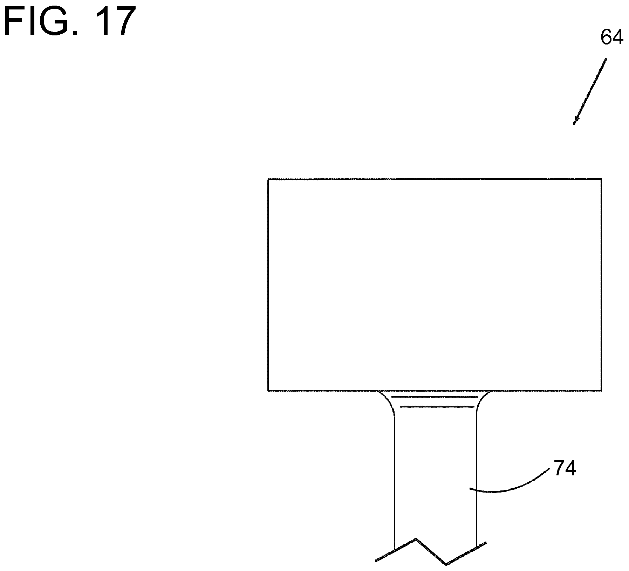

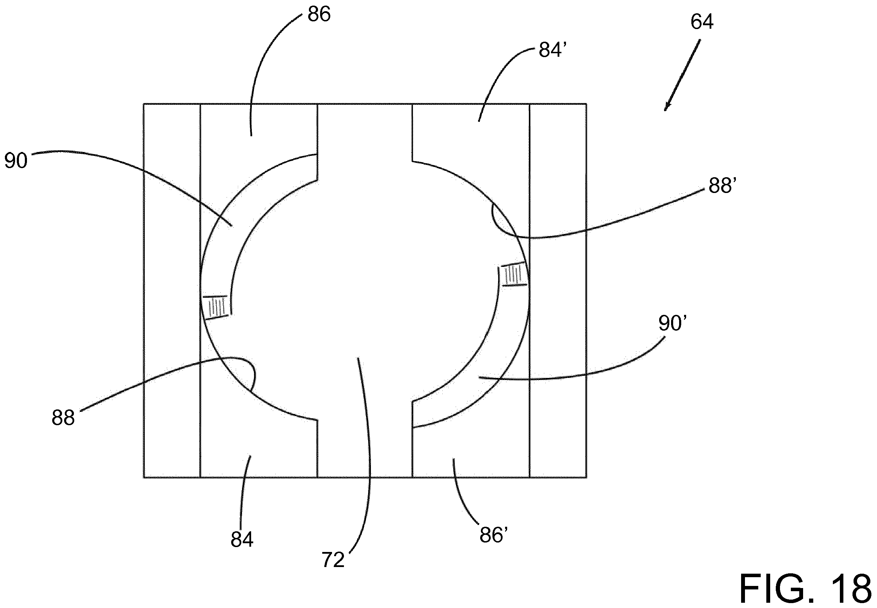

The socket 64 of the ball and socket fastener 50 is illustrated in isolation in FIGS. 15 through 18 in which a perspective view, a first side view, a second side view, and a top view are respectively shown. The socket 64 includes a pair of offset upper anti-release arms 84 and 84' and a pair of offset lower anti-release arms 86 and 86'. The upper anti-release arm 84 includes a ridge 85 and the upper anti-release arm 84' includes a ridge 85'. The lower anti-release arm 86 includes a ridge 87 and the lower anti-release arm 86' includes a ridge 87'. The ridges 85, 85', 87, and 87' add to the width of the arms 84, 84', 86, and 86' respectively so as to prevent the arms 84, 84', 86, and 86' from becoming captured by the semi-hemispheric slots 80, 80', 82, and 82'.

Each of the upper anti-release arms 84 and 84' and the lower anti-release arms 86 and 86' includes a arcuate, ball-contacting surface. Particularly, the upper anti-release arm 84 includes a downward arcuate, ball-contacting surface 88 and the upper anti-release arm 84' includes a downward arcuate, ball-contacting surface 88'. The lower anti-release arm 86 includes an upward arcuate, ball-contacting surface 90 and the lower anti-release arm 86' includes an upward arcuate, ball-contacting surface 90'.

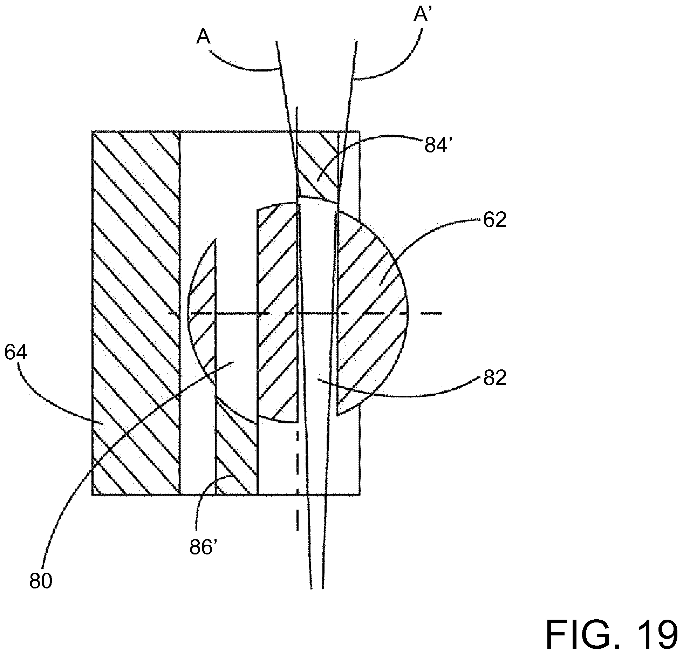

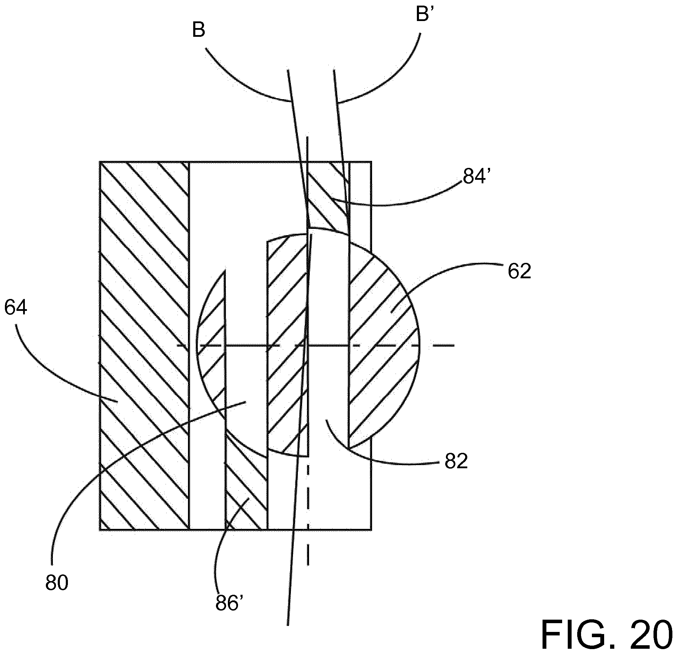

The arcuate surfaces 88, 88', 90, and 90' preferably but not absolutely contact the ball 62 to aid in securely retaining the ball 62 in the socket 64 and to prevent release of the ball 62 therefrom. This arrangement is illustrated in FIGS. 19 and 20.

Referring to FIG. 19, a diagrammatic sectional view of the ball 62 within the socket 64 taken along line 19-19 of FIG 11 is illustrated. As illustrated by the lines A and A', a negative draft potential is created between, for example, the arm 84' of the socket 64 and the slot 82 of the ball 62. The negative draft potential counteracts the opposing draft on the socket 64, thereby preventing both misalignment of the ball 62 relative to the socket 64 as well as inadvertent removal of the ball 62 from the socket 64.

Referring to FIG. 20, a diagrammatic sectional view of the ball 62 within the socket 64 taken along line 20-20 of FIG. 11 is illustrated. As illustrated by the lines B and B', opposite angular tool steels are formed relative to, for example, the arm 84' of the socket 64 and the slot 82 of the ball 62. This arrangement greatly decreases misalignment of the ball 62 relative to the socket 64 as well as inadvertent removal of the ball 62 from the socket 64 by transitioning clearances.

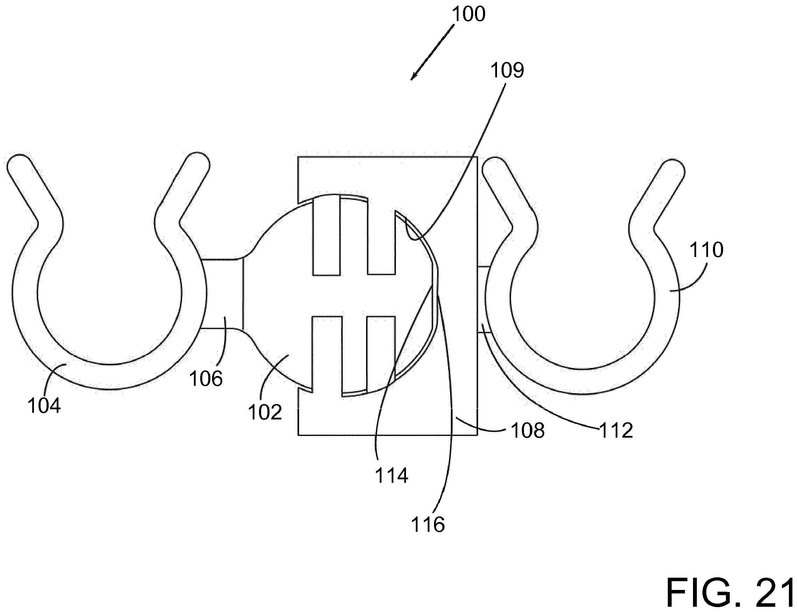

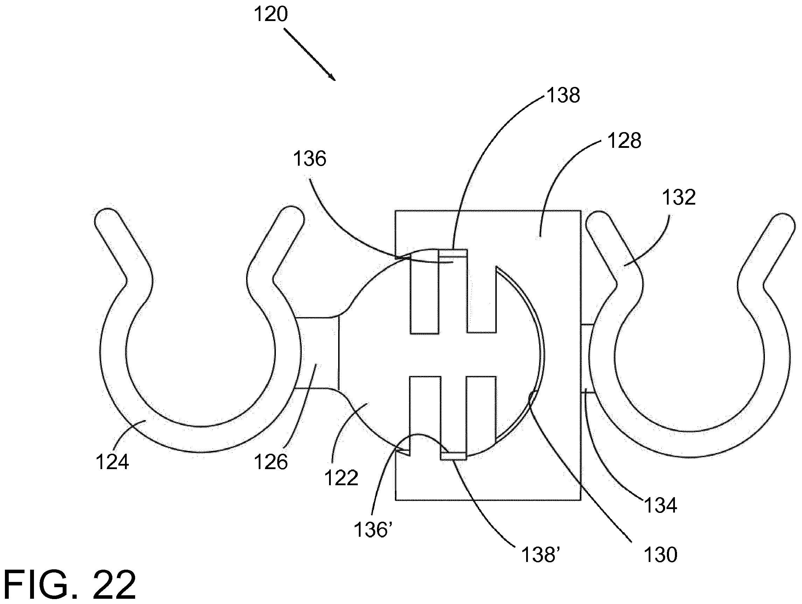

The ball and socket fastener arrangements illustrated in FIGS. 1 through 20 are capable of both rotating action and pivoting action. However, in certain applications, it may be desirable to restrict movement of the ball relative to the socket. Such restricted motion arrangements are illustrated in FIGS. 21 and 22. Referring to FIG. 21, a ball and socket fastener 100 is generally illustrated. The ball and socket fastener 100 includes a ball portion 102 that includes a clip 104 attached to the ball portion 102 by a ball attachment arm 106. The ball and socket fastener 100 further includes a socket portion 108 having a ball-receiving cavity 109 formed therein. A clip 110 is attached to the socket portion 108 by a socket attachment arm 112.

The ball and socket fastener 100 allows 360 degrees of rotation of the ball portion 102 relative to the socket portion 108 but which restricts the ball portion 102 from pivoting relative to the socket portion 108. Such limited movement may be desired for certain applications. The limited movement is the result of a flat surface 114 being formed on one end of the ball portion 102 and a flat surface 116 being formed on the base of the socket cavity 109.

As a further variation of the ball and socket fastener of the disclosed inventive concept, FIG. 22 illustrates a ball and socket fastener 120 that includes a ball portion 122 having a clip 124 attached to the ball portion 122 by a ball attachment arm 126. The ball and socket fastener 120 further includes a socket portion 128 having a ball-receiving cavity 130 formed therein. A clip 132 is attached to the socket portion 128 by a socket attachment arm 134.

The ball and socket fastener 120 also restricts movement of the ball portion 122 relative to the socket portion 128 by allowing pivoting motion of the ball portion 122 relative to the socket portion 128 but which restricts the ball portion 122 against rotation relative to the socket portion 128. Such alternative limited movement may be desired for certain applications. The limited movement is the result of a flat surfaces 136 and 136' being formed on the sides of the ball portion 122 and flat surfaces 138 and 138' being formed on the sides of the socket cavity 130.

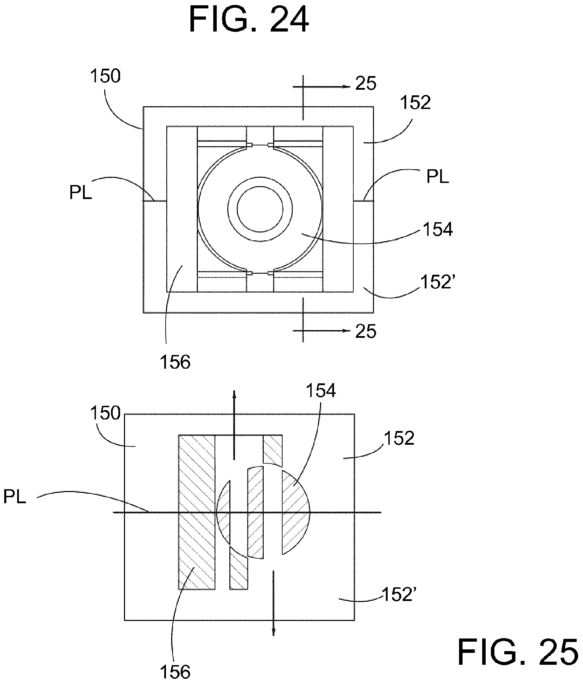

In addition to the improvements apparent in the various embodiments of the disclosed ball and socket fastener that offer various levels of movement, the disclosed inventive concept is also advantageous in its ease and flexibility of production. Preferably, though not absolutely, the ball and socket fastener may be formed by way of additive manufacturing or injection molding. If formed by additive manufacturing, the ball and socket are built up by layering of a plastic material, preferably though not absolutely as an integral unit using modeling software, machine equipment, and layering material. It is to be understood that additive manufacturing includes, without limitation, 3D printing, rapid prototyping (RP), direct digital manufacturing (DDM), layered manufacturing and additive fabrication. If the ball and socket fastener of the disclosed inventive concept is produced by injection molding, it may be formed from a single shot of injected material, such as a polymerizable material. Alternatively, the ball and socket fastener of the disclosed inventive concept may be formed as two separate pieces. Both of these embodiments are illustrated in FIGS. 24 through 27.

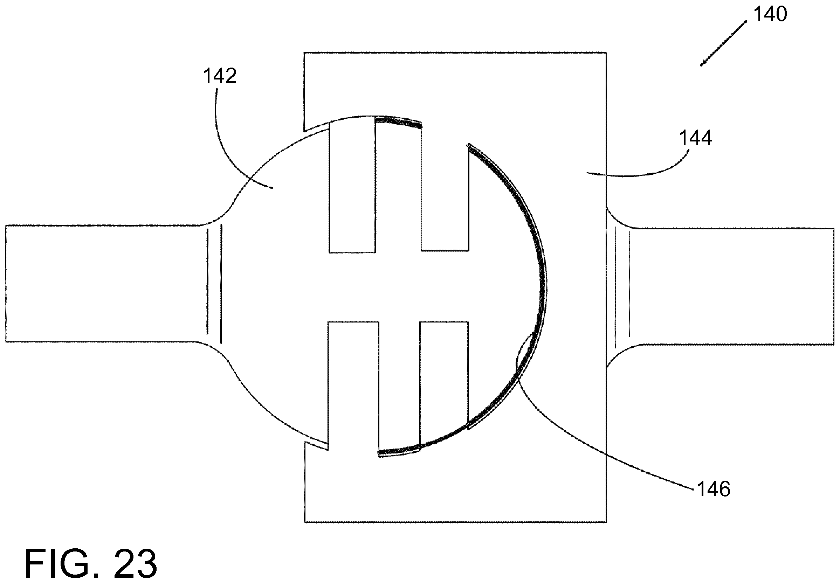

Referring to FIG. 23, a ball and socket fastener, generally illustrated as 140, is shown. The ball and socket fastener 140 includes a ball portion 142 and a socket portion 144. The ball portion 142 and the socket portion 144 of the ball and socket fastener 140 are formed as an integral piece by way of a single injection gate. A plastic flash gate 146 is formed between the ball portion 142 and the socket portion 144 on molding. The flash gate 146 readily breaks apart after molding to release the ball portion 142 from the socket portion 144. The plastic flash gate 146 may also be used to restrict the free rotation of the ball portion 142 in the socket portion 144 as may be desired for a specific application, such as creating an interference fit between the ball portion 142 and the socket portion 144. This feature adds to the overall tunability of the ball and socket fastener 140 whereby the interference fit would allow the ball portion 142 to be posed relative to the socket portion 144 for specific applications.

The ball and fastener clip of FIG. 23 may be molded as a single-shot injection molding process as illustrated in FIGS. 24 and 25 in which a mold cavity 150 is illustrated. The mold cavity 150 includes a mold cavity half 152 and a mold cavity half 152'. A part line PL separates the mold cavity half 152 and the mold cavity half 152'. Molded within the mold cavity 150 is a ball portion 154 integrally formed with a socket portion 156. The ball portion 154 and the socket portion 156 are preferably formed within the mold cavity 150 by a single shot injection process.

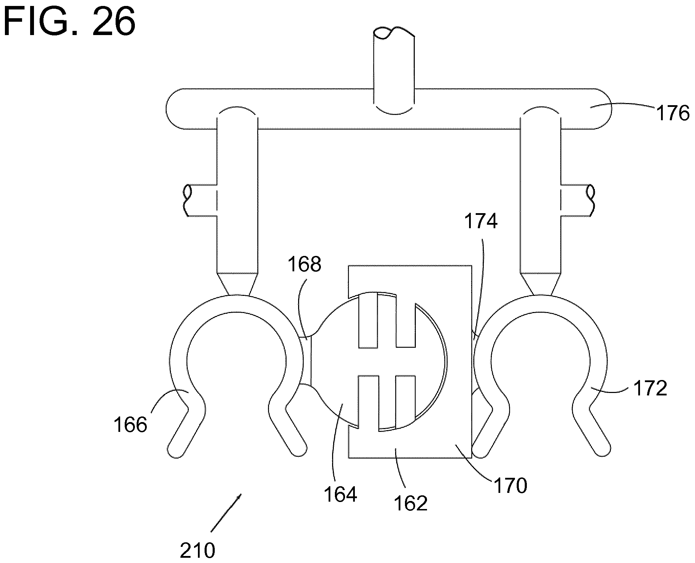

A further single-shot molding arrangement is illustrated in FIG. 26 in which a molded ball and socket fastener assembly 160 is shown after molding but prior to disassembly. The molded ball and socket fastener assembly 160 includes a ball and socket fastener 162 comprising a ball portion 164 having a clip 166 attached thereto by a clip attachment arm 168 and a socket portion 170 having a clip 172 attached thereto by an attachment arm 174. A mold runner 176 leads from its sprue end to gates formed at the injection areas of the clips 166 and 172.

As an alternative to the single shot molding process of FIGS. 23 through 26, a dual shot approach to molding may be undertaken by which the ball is molded separately from the socket using the same or a different material. For example, one material may be relatively elastic and the other material may be relatively rigid. The dual shot operation not only offers the flexibility of using two different materials, but by doing so optionally provides a method of incorporating different shrink rates as a further approach to minimizing the possibility of the ball from being inadvertently removed from the socket. Furthermore, the dual shot operation offers the manufacturer a way of reducing costs by using a stronger material, and thus more expensive material, only as needed.

Accordingly, the general methodology for producing the ball and socket fastener of the disclosed inventive concept, whether by additive manufacturing or by injection molding includes the following steps:

First, forming a machine for shaping the ball and socket fastener. The machine may be, for example, a 3D printer in the case of additive manufacturing or a mold coupled to an injection molding machine.

Second, initiating the simultaneous production of both the ball and the socket of the ball and socket fastener by a single action. The single action, in the case of additive manufacturing or in the case of injection molding, includes pressing the machine activating switch or button of the ball and socket forming machine.

Third, forming the ball and socket fastener according to a single, continuous operation following the initiation of production by the single action of the second step. The single, continuous step, once initiated at the second step, does not require any additional input by the operator.

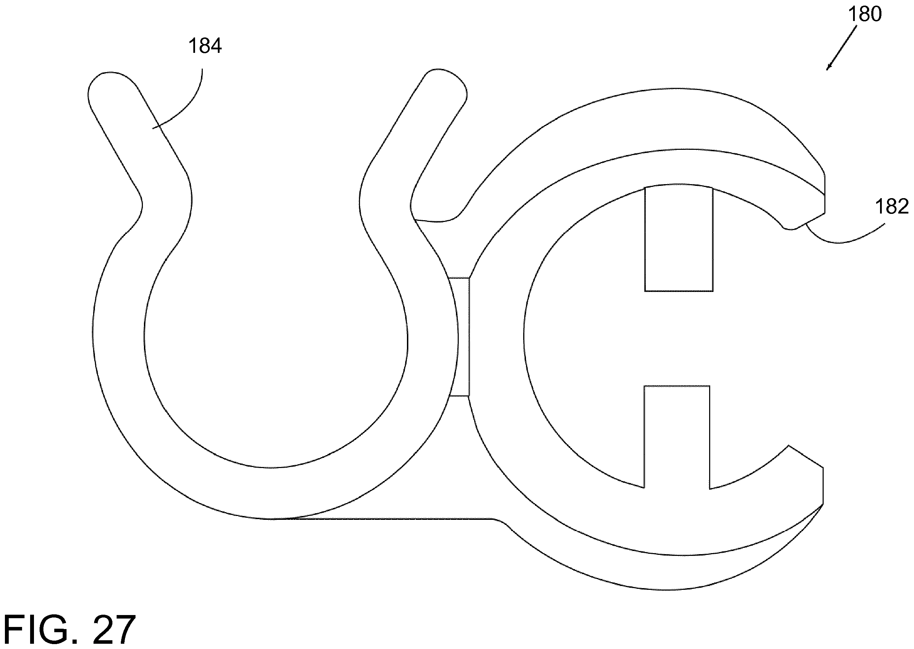

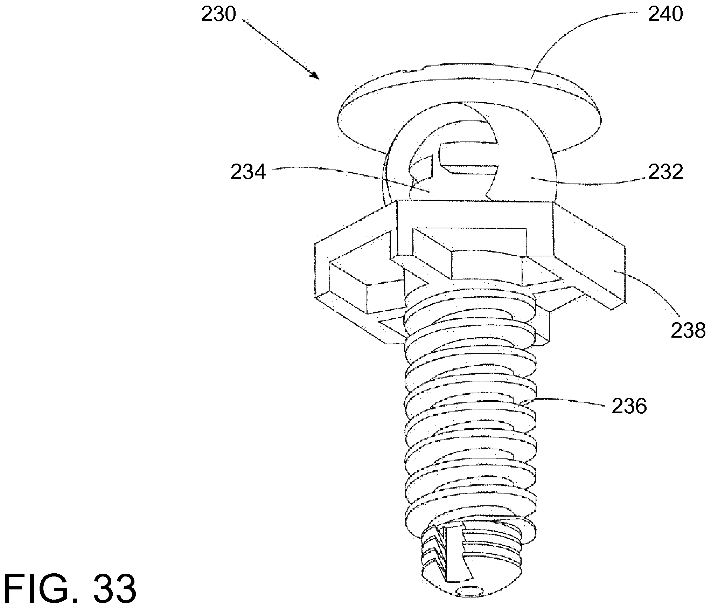

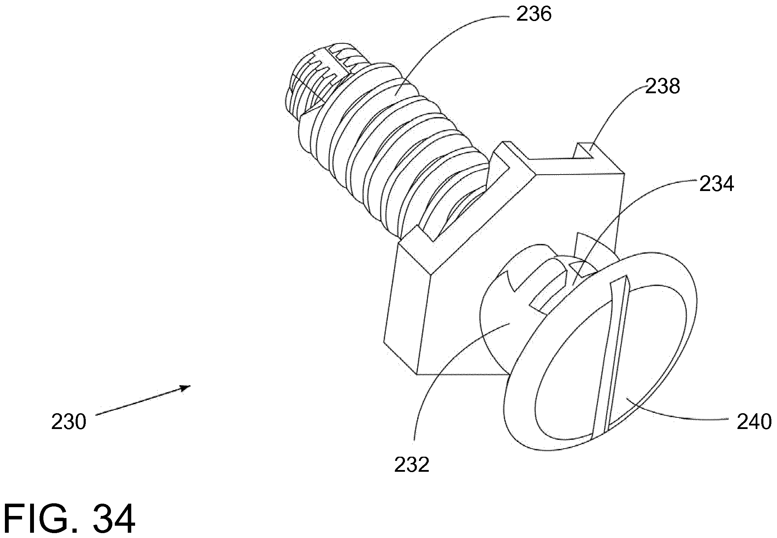

Once produced by the methods described above or by another method, the ball and socket fastener of the disclosed inventive concept may be used for a wide variety of applications in addition to those described above. Non-limiting examples of such variations are illustrated in FIGS. 27 through 34. It is to be understood that the variations of the ball and socket fastener illustrated in these figures are suggestive only as other applications of the ball and socket fastener are possible without deviating from either the spirit or the scope of the disclosed inventive concept.

Referring to FIG. 27, a socket of a ball and socket according to a variation of the disclosed inventive concept having an integral fastener clip is illustrated. The socket, generally illustrated as 180, includes a socket portion 182 having an integrally-attached clip 184. The clip 184 may be attached to a fluid line or an electrical conduit.

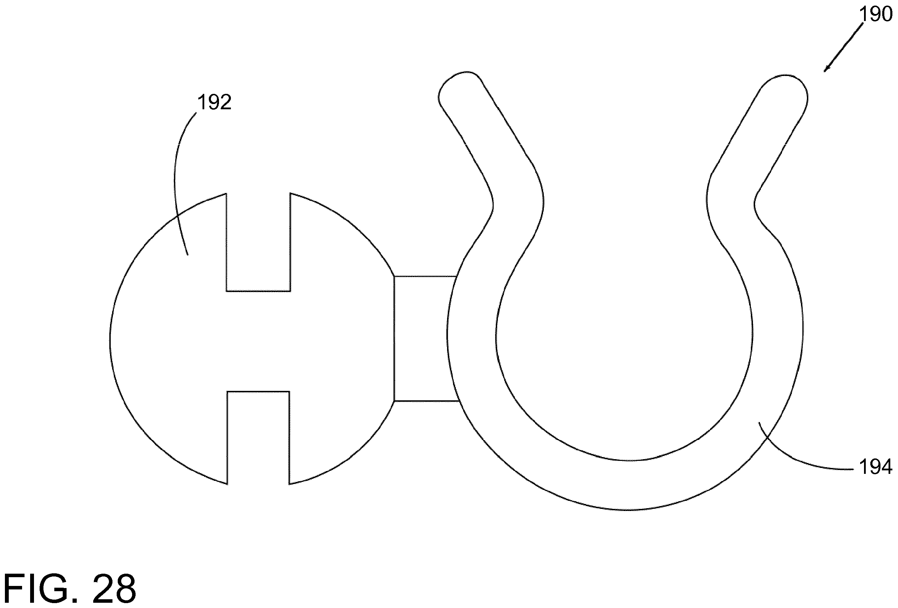

Referring to FIG. 28, a ball of a ball and socket according to a variation of the disclosed inventive concept having an integral fastener clip is illustrated. The ball, generally illustrated as 190, includes a ball portion 192 having an integrally-attached clip 194. The clip 194 may be attached to a fluid line or an electrical conduit.

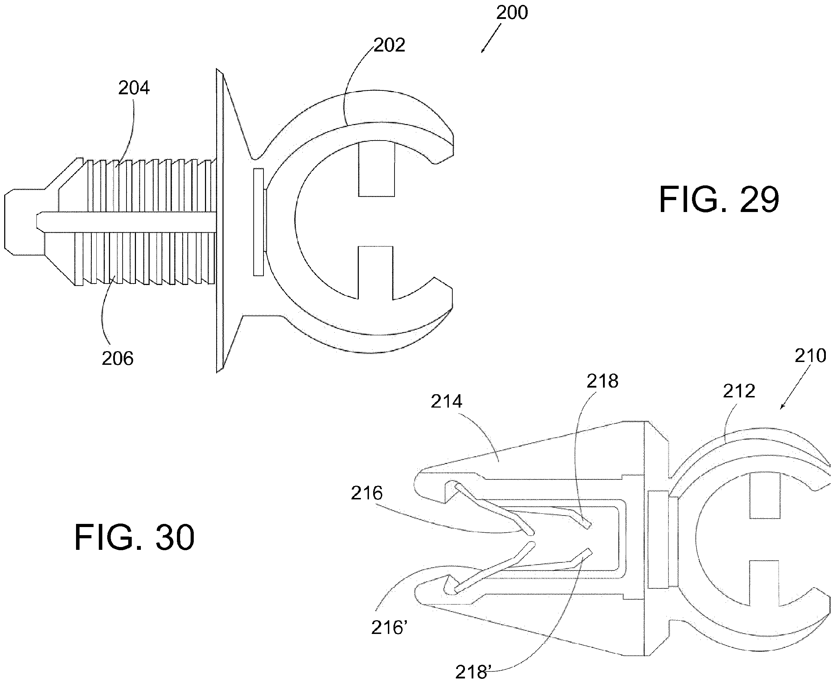

Referring to FIG. 29, a socket of a ball and socket according to a variation of the disclosed inventive concept having an integral hole mount is illustrated. The socket, generally illustrated as 200, includes a socket portion 202 having an integral hole mount 204. The integrated hole mount 204 includes a series of alternating, hole-gripping flanges 206. The hole mount 204 may be attached to a substrate, such as a vehicle fender. It is to be understood that while the socket portion 202 is illustrated, a ball for use in a ball and socket fastener may be incorporated in the alternative.

Referring to FIG. 30, a socket of a ball and socket according to a variation of the disclosed inventive concept having an integral edge mount clip is illustrated. The socket, generally illustrated as 210, includes a socket portion 212 having an integral edge mount 214. A pair of opposed barbs 216 and 216' and a pair of opposed barbs 218 and 218' are formed in the integral clip edge mount 214 for gripping a flat object. The edge mount 214 may be attached to a substrate having a flat portion or a flat edge. It is to be understood that while the socket portion 212 is illustrated, a ball for use in a ball and socket fastener may be incorporated in the alternative.

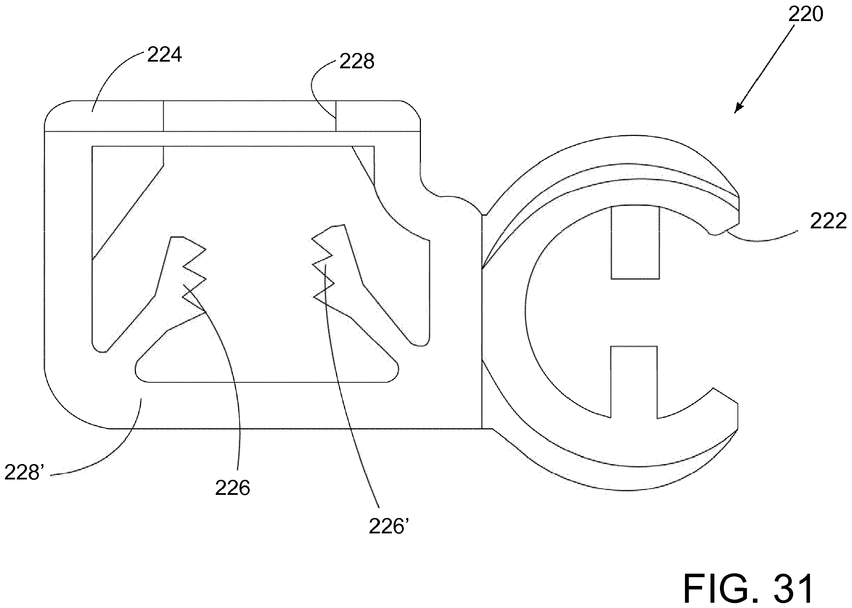

Referring to FIG. 31, a socket of a ball and socket according to a variation of the disclosed inventive concept having an integral stud mount clip is illustrated. The socket, generally illustrated as 220, includes a socket portion 222 having an integral stud mount clip 224. The stud mount clip 224 includes a pair of opposed threaded gripper arms 226 and 226' and a pair of opposed stud-passing holes 228 and 228'. The socket 220 may be attached to a threaded or smooth stud by passing the stud (not shown) through one of the stud-passing holes 228 and 228', through the opposed threaded gripper arms 226 and 226', and out of the other stud-passing hole. It is to be understood that while the socket portion 222 is illustrated, a ball for use in a ball and socket fastener may be incorporated in the alternative.

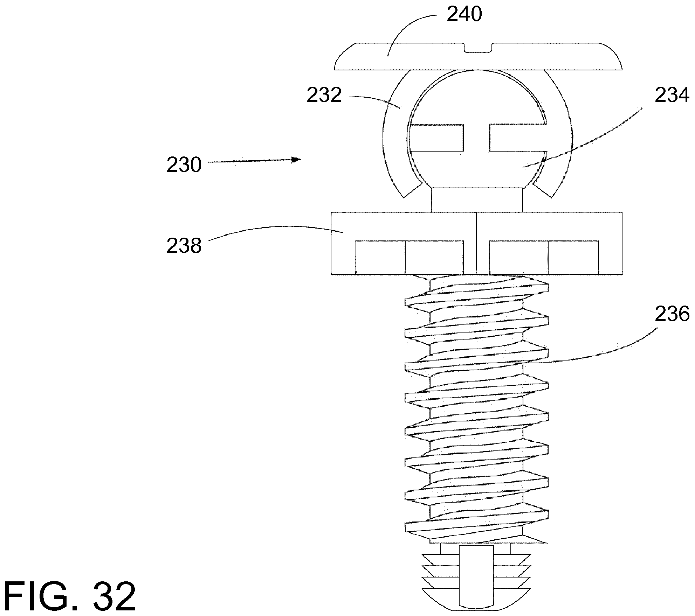

In addition to providing use as a fastener for attachment to a fluid line, a conduit, and a substrate as described above, the ball and socket fastener of the disclosed inventive concept may also find application for other uses. One of these uses is illustrated in FIGS. 32 through 34 in which a ball and socket of the disclosed inventive concept includes an integrally-formed height adjuster. The ball and socket height adjuster, generally illustrated as 230, includes a socket 232 and a ball 234. The ball and socket height adjuster 230 may be attached to any article requiring corner height adjusters so as to level the article. Such articles may include, for example and without limitation, household appliances, furniture, and machinery. The socket 232 and the ball 234 are of the same configuration as the ball and socket arrangement illustrated in FIGS. 1 through 9 and discussed with respect thereto.

Integrally formed with the ball 234 is a threaded stud 236. The dimensions of the threaded stud 236 may be varied as required for a specific purpose. To accommodate the threaded stud 236, a hole having a diameter greater than that of the threaded stud 236 is formed on the underside of the article to be leveled. A height adjustment plate 238 is integrally molded with the threaded stud 236. A foot 240 is integrally attached to the socket 232. The foot 240 is provided to rest the article to be leveled on a floor or other substrate. Once the ball and socket height adjuster 230 is attached to the article to be leveled, the height adjustment plate 238 is grasped either by hand or by a tool (neither shown) and is threaded in or out of the article to be leveled to which it is attached to achieve the proper level.

One skilled in the art will readily recognize from such discussion, and from the accompanying drawings and claims that various changes, modifications and variations can be made therein without departing from the true spirit and fair scope of the invention as defined by the following claims.

## Claims

1. A fastening system comprising:
a ball portion (102, 122, 142, 154, 164, 192) having slots (30, 30', 80, 80', 82, 82') formed therein, said ball portion (102, 122, 142, 154, 164, 192) including a first article fastener;
a socket portion (108, 128, 144, 154, 170, 182, 202) having a cavity (22, 72, 109, 130, 150) for retaining said ball portion, said socket portion including raised surfaces extending from said cavity (22, 72, 109, 130, 150), said socket portion (108, 128, 144, 156, 170, 182, 202) further including a second article fastener, whereby said raised surfaces retain said ball portion (102, 122, 142, 154, 164, 192) within said socket portion (108, 128, 144, 156, 170, 182, 202).

2. The fastening system of Claim 1, wherein said raised surfaces are first and second opposed arms (34, 34', 84, 84', 86, 86').

3. The fastening system of Claim 2, wherein said slots (30 30', 80, 80', 82, 82') are semi-hemispheric.

4. The fastening system of Claim 3, wherein said ball portion (102, 122, 142, 154, 164, 192) includes a first side and a second side and wherein said slots (30, 30', 80, 80', 82, 82') comprise a first slot formed on said first side of said ball portion (102, 122, 142, 154, 164, 192) and a second slot formed on said second side of said ball portion.

5. The fastening system of Claim 4, further including a second slot formed on said first side and a second slot formed on said second side.

6. The fastening system of Claim 2, wherein said opposing arms (34, 34', 84, 84', 86, 86') include a first pair of arms and a second pair of arms, said first pair of arms opposing said second pair of arms.

7. The fastening system of Claim 6, wherein said first pair of arms include a first upper arm and a first lower arm and said second pair of arms include a second upper arm and a second lower arm, said upper arms having a downward facing arcuate surface (36, 36', 88, 88', 90, 90') formed thereon and said lower arms having an upward facing arcuate surface (36, 36', 88, 88', 90, 90') formed thereon.

8. The fastening system of Claim 2, wherein said arms include arcuate surfaces (36, 36', 88, 88', 90, 90').

9. The fastening system of Claim 1 or 2, wherein said ball portion (102, 122, 142, 154, 164, 192) is rotatable 360 degrees within said socket portion (108, 128, 144, 156, 170, 182, 202).

10. The fastening system of Claim 1 or 2, wherein said ball portion (102, 122, 142, 154, 164, 192) includes a top, said top having a flat portion, and said cavity (22, 72, 109, 130, 150) of said socket portion (108, 128, 144, 156, 170, 182, 202) includes a bottom, said bottom having a flat portion, said flat portion of said ball portion (102, 122, 142, 154, 164, 192) being rotatably engagable with said flat portion of said cavity (22, 72, 109, 130, 150).

11. The fastening system of Claim 1 or 2, wherein said ball portion includes sides, said sides having a flat portion, and said cavity of said socket includes sides, said sides having a flat portion, said flat portion of said ball portion (102, 122, 142, 154, 164, 192) being pivotably engagable with said flat portion of said cavity (22, 72, 109, 130, 150).

12. The fastening system of Claim 1 or 2, wherein said slots have arm-interfering ribs (40, 40') formed thereon.

13. The fastening system of Claim 1, wherein said ball portion (102, 122, 142, 154, 164, 192) and said socket portion (108, 128, 144, 156, 170, 182, 202) are formed from the same material or from different materials.

14. A method of forming a ball and socket fastener system, according to one of the previous claims, the method comprising:
forming a machine for shaping the ball and socket fastener;
initiating the simultaneous production of both the ball and the socket of the the ball and socket fastener by a single action;
completing the production of the ball and socket fastener in a single, continuous step following initiation of the production by the single action without further input by the operator.

## Patentansprüche

1. Befestigungssystem, umfassend:
einen Kugelabschnitt (102, 122, 142, 154, 164, 192), der Schlitze (30, 30', 80, 80', 82, 82') aufweist, die darin gebildet sind, wobei der Kugelabschnitt (102, 122, 142, 154, 164, 192) eine erste Artikelbefestigung beinhaltet;
einen Gelenkabschnitt (108, 128, 144, 154, 170, 182, 202), der einen Hohlraum (22, 72, 109, 130, 150) aufweist, um den Kugelabschnitt zu halten, wobei der Gelenkabschnitt erhabene Flächen beinhaltet, die sich von dem Hohlraum (22, 72, 109, 130, 150) erstrecken, wobei der Gelenkabschnitt (108, 128, 144, 156, 170, 182, 202) ferner eine zweite Artikelbefestigung beinhaltet, wodurch die erhabenen Flächen den Kugelabschnitt (102, 122, 142, 154, 164, 192) innerhalb des Gelenkabschnittes (108, 128, 144, 156, 170, 182, 202) halten.

2. Befestigungssystem nach Anspruch 1, wobei die erhabenen Flächen erste und zweite gegenüberliegende Arme (34, 34', 84, 84', 86, 86') sind.

3. Befestigungssystem nach Anspruch 2, wobei die Schlitze (30 30', 80, 80', 82, 82') semi-halbkugelförmig sind.

4. Befestigungssystem nach Anspruch 3, wobei der Kugelabschnitt (102, 122, 142, 154, 164, 192) eine erste Seite und eine zweite Seite beinhaltet und wobei die Schlitze (30, 30', 80, 80', 82, 82') einen ersten Schlitz, der auf der ersten Seite des Kugelabschnittes (102, 122, 142, 154, 164, 192) gebildet ist, und einen zweiten Schlitz umfassen, der auf der zweiten Seite des Kugelabschnittes gebildet ist.

5. Befestigungssystem nach Anspruch 4, ferner beinhaltend einen zweiten Schlitz, der auf der ersten Seite gebildet ist, und einen zweiten Schlitz, der auf der zweiten Seite gebildet ist.

6. Befestigungssystem nach Anspruch 2, wobei die gegenüberliegenden Arme (34, 34', 84, 84', 86, 86') ein erstes Paar Arme und ein zweites Paar Arme beinhalten, wobei das erste Paar Arme dem zweiten Paar Arme gegenüberliegt.

7. Befestigungssystem nach Anspruch 6, wobei das erste Paar Arme einen ersten oberen Arm und einen ersten unteren Arm beinhaltet und das zweite Paar Arme einen zweiten oberen Arm und einen zweiten unteren Arm beinhaltet, wobei die oberen Arme eine nach unten gerichtete bogenförmige Fläche (36, 36', 88, 88', 90, 90') aufweisen, die darauf gebildet ist, und die unteren Arme eine nach oben gerichtete bogenförmige Fläche (36, 36', 88, 88', 90, 90') aufweisen, die darauf gebildet ist.

8. Befestigungssystem nach Anspruch 2, wobei die Arme bogenförmige Flächen (36, 36', 88, 88', 90, 90') beinhalten.

9. Befestigungssystem nach Anspruch 1 oder 2, wobei der Kugelabschnitt (102, 122, 142, 154, 164, 192) 360 Grad innerhalb des Gelenkabschnittes (108, 128, 144, 156, 170, 182, 202) drehbar ist.

10. Befestigungssystem nach Anspruch 1 oder 2, wobei der Kugelabschnitt (102, 122, 142, 154, 164, 192) eine Oberseite beinhaltet, wobei die Oberseite einen flachen Abschnitt aufweist, und der Hohlraum (22, 72, 109, 130, 150) des Gelenkabschnittes (108, 128, 144, 156, 170, 182, 202) eine Unterseite beinhaltet, wobei die Unterseite einen flachen Abschnitt aufweist, wobei der flache Abschnitt des Kugelabschnittes (102, 122, 142, 154, 164, 192) in Eingriff mit dem flachen Abschnitt des Hohlraums (22, 72, 109, 130, 150) bringbar drehbar ist.

11. Befestigungssystem nach Anspruch 1 oder 2, wobei der Kugelabschnitt Seiten beinhaltet, wobei die Seiten einen flachen Abschnitt aufweisen, und der Hohlraum des Gelenks Seiten beinhaltet, wobei die Seiten einen flachen Abschnitt aufweisen, wobei der flache Abschnitt des Kugelabschnittes (102, 122, 142, 154, 164, 192) in Eingriff mit dem flachen Abschnitt des Hohlraums (22, 72, 109, 130, 150) bringbar schwenkbar ist.

12. Befestigungssystem nach Anspruch 1 oder 2, wobei die Schlitze armstörende Rippen (40, 40') aufweisen, die darauf gebildet sind.

13. Befestigungssystem nach Anspruch 1, wobei der Kugelabschnitt (102, 122, 142, 154, 164, 192) und der Gelenkabschnitt (108, 128, 144, 156, 170, 182, 202) aus dem gleichen Material oder aus unterschiedlichen Materialien gebildet sind.

14. Verfahren zum Bilden eines Kugelgelenkbefestigungssystems nach einem der vorhergehenden Ansprüche, wobei das Verfahren Folgendes umfasst:
Bilden einer Maschine zum Formen der Kugelgelenkbefestigung;
Initiieren der gleichzeitigen Herstellung sowohl der Kugel als auch des Gelenks der der Kugelgelenkbefestigung durch eine einzige Handlung;
Fertigstellen der Herstellung der Kugelgelenkbefestigung in einem einzigen, durchgehenden Schritt nach Initiierung der Herstellung durch die einzige Handlung ohne weitere Eingabe durch den Bediener.

## Revendications

1. Système de fixation comprenant :
une partie rotule (102, 122, 142, 154, 164, 192) comportant des fentes (30, 30', 80, 80', 82, 82') formées à l'intérieur de celle-ci, ladite partie rotule (102, 122, 142, 154, 164, 192) comprenant un premier dispositif de fixation d'article ;
une partie douille (108, 128, 144, 154, 170, 182, 202) possédant une cavité (22, 72, 109, 130, 150) destinée à retenir ladite partie rotule, ladite partie douille comprenant des surfaces surélevées s'étendant à partir de ladite cavité (22, 72, 109, 130, 150), ladite partie douille (108, 128, 144, 156, 170, 182, 202) comprenant en outre un second dispositif de fixation d'article, grâce à quoi lesdites surfaces surélevées retiennent ladite partie rotule (102, 122, 142, 154, 164, 192) dans ladite partie douille (108, 128, 144, 156, 170, 182, 202).

2. Système de fixation selon la revendication 1, lesdites surfaces surélevées étant des premier et second bras opposés (34, 34', 84, 84', 86, 86').

3. Système de fixation selon la revendication 2, lesdites fentes (30, 30', 80, 80', 82, 82') étant semi-hémisphériques.

4. Système de fixation selon la revendication 3, ladite partie rotule (102, 122, 142, 154, 164, 192) comprenant un premier côté et un second côté et lesdites fentes (30, 30', 80, 80', 82, 82') comprenant une première fente formée sur ledit premier côté de ladite partie rotule (102, 122, 142, 154, 164, 192) et une seconde fente formée sur ledit second côté de ladite partie rotule.

5. Système de fixation selon la revendication 4, comprenant en outre une seconde fente formée sur ledit premier côté et une seconde fente formée sur ledit second côté.

6. Système de fixation selon la revendication 2, lesdits bras opposés (34, 34', 84, 84', 86, 86') comprenant une première paire de bras et une seconde paire de bras, ladite première paire de bras étant opposée à ladite seconde paire de bras.

7. Système de fixation selon la revendication 6, ladite première paire de bras comprenant un premier bras supérieur et un premier bras inférieur et ladite seconde paire de bras comprenant un second bras supérieur et un second bras inférieur, lesdits bras supérieurs possédant une surface arquée orientée vers le bas (36, 36', 88, 88', 90, 90') formée sur celui-ci et lesdits bras inférieurs possédant une surface arquée orientée vers le haut (36, 36', 88, 88', 90, 90') formée sur celui-ci.

8. Système de fixation selon la revendication 2, lesdits bras comprenant des surfaces arquées (36, 36', 88, 88', 90, 90').

9. Système de fixation selon la revendication 1 ou 2, ladite partie rotule (102, 122, 142, 154, 164, 192) pouvant tourner à 360 degrés à l'intérieur de ladite partie douille (108, 128, 144, 156, 170, 182, 202).

10. Système de fixation selon la revendication 1 ou 2, ladite partie rotule (102, 122, 142, 154, 164, 192) comprenant une partie supérieure, ladite partie supérieure possédant une partie plate, et ladite cavité (22, 72, 109, 130, 150) de ladite partie douille (108, 128, 144, 156, 170, 182, 202) comprenant une partie inférieure, ladite partie inférieure possédant une partie plate, ladite partie plate de ladite partie rotule (102, 122, 142, 154, 164, 192) pouvant se mettre en prise de manière rotative avec ladite partie plate de ladite cavité (22, 72, 109, 130, 150).

11. Système de fixation selon la revendication 1 ou 2, ladite partie rotule comprenant des côtés, lesdits côtés possédant une partie plate, et ladite cavité de ladite douille comprenant des côtés, lesdits côtés possédant une partie plate, ladite partie plate de ladite partie rotule (102, 122, 142, 154, 164, 192) pouvant se mettre en prise de manière pivotante avec ladite partie plate de ladite cavité (22, 72, 109, 130, 150).

12. Système de fixation selon la revendication 1 ou 2, lesdites fentes comportant des nervures (40, 40') interférant avec les bras formées sur celles-ci.

13. Système de fixation selon la revendication 1, ladite partie rotule (102, 122, 142, 154, 164, 192) et ladite partie douille (108, 128, 144, 156, 170, 182, 202) étant constituées du même matériau ou de matériaux différents.

14. Procédé de formation d'un système de fixation à liaison rotule, selon l'une des revendications précédentes, le procédé comprenant : la formation d'une machine destinée à façonner le dispositif de fixation à liaison rotule ;
le lancement de la production simultanée à la fois de la rotule et de la douille du dispositif de fixation à liaison rotule par une seule action ;
l'achèvement de la production du dispositif de fixation à liaison rotule en une seule étape continue après le lancement de la production par l'action unique sans intervention supplémentaire de l'opérateur.
